# EUROPEAN PATENT APPLICATION

(11) **EP 4 686 511 A1**
(43) Date of publication of application: **04.02.2026**
(21) Application number: 25191533.6
(22) Date of filing: 24.07.2025
(51) Int. Cl.: B05C 5/02, B05C 11/00, B25J 9/16

(54) **FILLING METHOD, NON-TRANSITORY STORAGE MEDIUM, AND ROBOT SYSTEM**

(30) Priority: 30.07.2024 JP 2024123774
(71) Applicant: Seiko Epson Corporation, Tokyo 160-8801 (JP)
(72) Inventor: SHIMIZU, Hiroyuki, Suwa-shi, Nagano, 392-8502 (JP); MATSUSHITA, Tsubasa, Suwa-shi, Nagano, 392-8502 (JP)
(74) Representative: MERH-IP Matias Erny Reichl Hoffmann Patentanwälte PartG mbB

(57) **Abstract**

A filling method is disclosed in which a robot arm moves a discharge port to a first position in a first recessed portion, and at the first position, a discharge of the viscous material is started. After the discharge of the viscous material is started, the discharge of the viscous material is stopped. In a state where the discharge of the viscous material is stopped, the robot arm moves the discharge port above the first recessed portion. In a state where the discharge of the viscous material is stopped, the robot arm moves the discharge port to a second position in the first recessed portion by moving the discharge port in the horizontal direction and then moving the discharge port downward along the vertical direction, or by moving the discharge port obliquely downward. At the second position, the discharge of the viscous material from the discharge port is started.

## Description

The present application is based on, and claims priority from JP Application Serial Number 2024-123774, filed July 30, 2024, the disclosure of which is hereby incorporated by reference herein in its entirety.

### BACKGROUND

### 1. Technical Field

The present disclosure relates to a filling method, a non-transitory storage medium storing a filling program, and a robot system.

### 2. Related Art

A robot described in JP-A-2020-049642 includes a robot arm and a dispenser that is provided at a tip end portion of the robot arm and discharges a viscous liquid discharge material such as an uncured adhesive. By changing the posture of the robot arm as desired, the discharge port of the dispenser is moved along a predetermined locus, and the discharge material is continuously discharged during the movement. An object to which the discharge material is discharged in JP-A-2020-049642 is a work having a discharge surface that is a flat surface.

By driving the robot arm so that the dispenser moves above the discharge surface while discharging the discharge material at a constant discharge amount, the discharge material can be supplied to the discharge surface.

The robot in JP-A-2020-049642 is not intended to be used for filling a recessed portion of a work that has the recessed portion with a discharge material. Therefore, when the robot in JP-A-2020-049642 is used to fill a recessed portion of a work with the discharge material, it is difficult to efficiently supply the discharge material in the recessed portion.

### SUMMARY

A filling method according to the present disclosure is a filling method, by using a robot having a robot arm and a discharge unit provided at a tip end of the robot arm and having a discharge port for discharging a viscous material,, for discharging the viscous material at a first position and a second position in a first recessed portion of a work having the first recessed portion, the second position being different from the first position in plan view of the first recessed portion, and filling the first recessed portion with the viscous material. The filling method includes moving, by the robot arm, the discharge port to the first position in the first recessed portion, starting a discharge of the viscous material from the discharge port at the first position, stopping the discharge of the viscous material after the discharge of the viscous material is started, moving, by the robot arm, the discharge port above the first recessed portion in a state where the discharge of the viscous material is stopped, moving, by the robot arm, the discharge port to the second position in the first recessed portion in a state where the discharge of the viscous material is stopped, the robot arm moving the discharge port in a horizontal direction and then moving the discharge port downward along a vertical direction or moving the discharge port obliquely downward, and starting the discharge of the viscous material from the discharge port at the second position.

A non-transitory storage medium according to the present disclosure stores a filling program for executing a filling method, by using a robot having a robot arm and a discharge unit provided at a tip end of the robot arm and having a discharge port for discharging a viscous material, for discharging the viscous material at a first position and a second position in a first recessed portion of a work having the first recessed portion, the second position being different from the first position in plan view of the first recessed portion, and filling the first recessed portion with the viscous material. The robot arm moves the discharge port to the first position in the first recessed portion, and at the first position, a discharge of the viscous material from the discharge port is started. After the discharge of the viscous material is started, the discharge of the viscous material is stopped. In a state where the discharge of the viscous material is stopped, the robot arm moves the discharge port above the first recessed portion. In a state where the discharge of the viscous material is stopped, the robot arm moves the discharge port to the second position in the first recessed portion by moving the discharge port in a horizontal direction and then moving the discharge port downward along a vertical direction, or by moving the discharge port obliquely downward. At the second position, the discharge of the viscous material from the discharge port is started.

A robot system according to the present disclosure includes a robot having a robot arm and a discharge unit provided at a tip end of the robot arm and having a discharge port for discharging a viscous material, and a robot control device configured to control an operation of the robot. The robot system discharges the viscous material at a first position and a second position in a first recessed portion of a work having the first recessed portion, the second position being different from the first position in plan view of the first recessed portion, and fills the first recessed portion with the viscous material. The robot control device is configured to move the discharge port to the first position in the first recessed portion, start a discharge of the viscous material from the discharge port at the first position, stop the discharge of the viscous material after the discharge of the viscous material is started, move the discharge port above the first recessed portion in a state where the discharge of the viscous material is stopped, move the discharge port to the second position in the first recessed portion in a state where the discharge of the viscous material is stopped, by moving the discharge port in a horizontal direction and then moving the discharge port downward along a vertical direction, or by moving the discharge port obliquely downward, and start the discharge of the viscous material from the discharge port at the second position.

### BRIEF DESCRIPTION OF THE DRAWINGS

FIG. 1 is a schematic configuration diagram of a robot system according to a first embodiment of the present disclosure.
FIG. 2 is a block diagram of the robot system illustrated in FIG. 1.
FIG. 3 is a diagram illustrating an example of a hardware configuration of the robot system illustrated in FIG. 1.
FIG. 4 is a side view of a discharge unit included in the robot system illustrated in FIG. 1.
FIG. 5 is a cross-sectional side view illustrating a state in which the filling method according to the first embodiment of the present disclosure is executed.
FIG. 6 is a cross-sectional side view illustrating a state in which the filling method according to the first embodiment of the present disclosure is executed.
FIG. 7 is a cross-sectional side view illustrating a state in which the filling method according to the first embodiment of the present disclosure is executed.
FIG. 8 is a cross-sectional side view illustrating a state in which the filling method according to the first embodiment of the present disclosure is executed.
FIG. 9 is a cross-sectional side view illustrating a state in which the filling method according to the first embodiment of the present disclosure is executed.
FIG. 10 is a cross-sectional side view illustrating a state in which the filling method according to the first embodiment of the present disclosure is executed.
FIG. 11 is a cross-sectional side view illustrating a state in which the filling method according to the first embodiment of the present disclosure is executed.
FIG. 12 is a flowchart for explaining the filling method according to the first embodiment of the present disclosure.
FIG. 13 is a cross-sectional side view illustrating a state in which a filling method according to a second embodiment of the present disclosure is executed.
FIG. 14 is a flowchart for explaining the filling method according to the second embodiment of the present disclosure.

### DESCRIPTION OF EMBODIMENTS

Hereinafter, a filling method, a filling program, and a robot system of the present disclosure will be described in detail based on embodiments illustrated in the accompanying drawings.

### First Embodiment

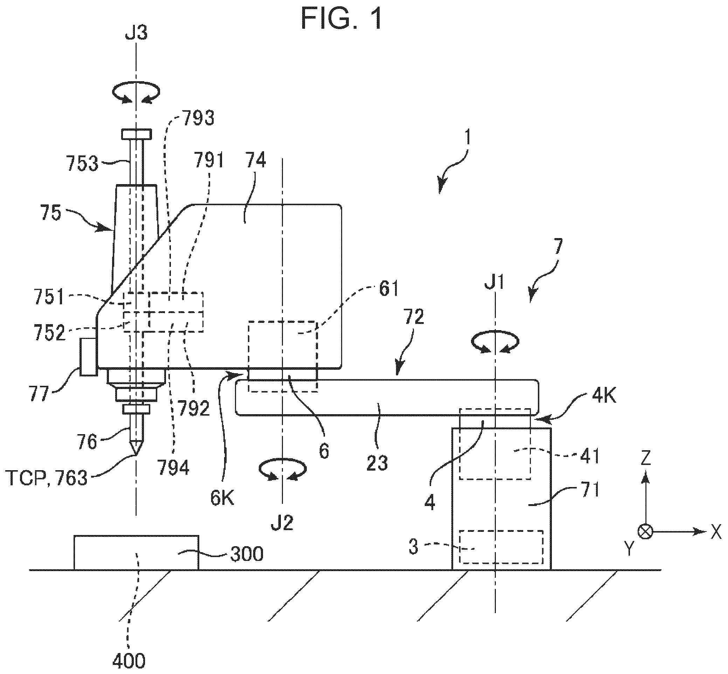

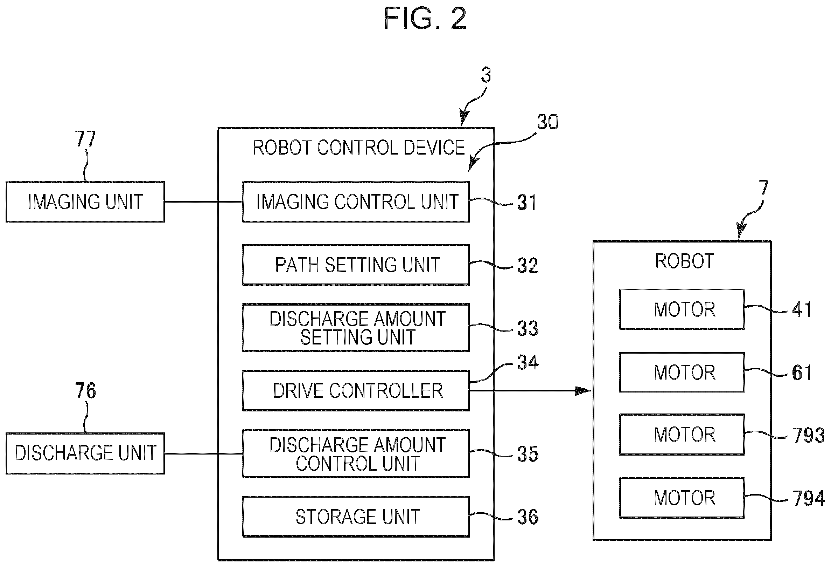

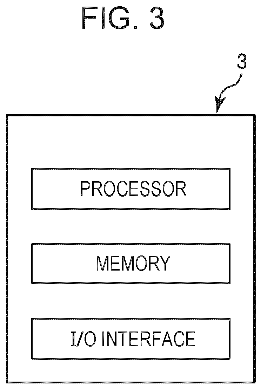

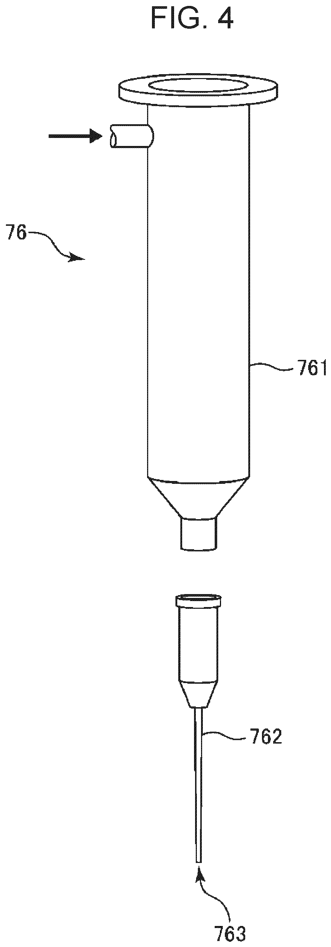

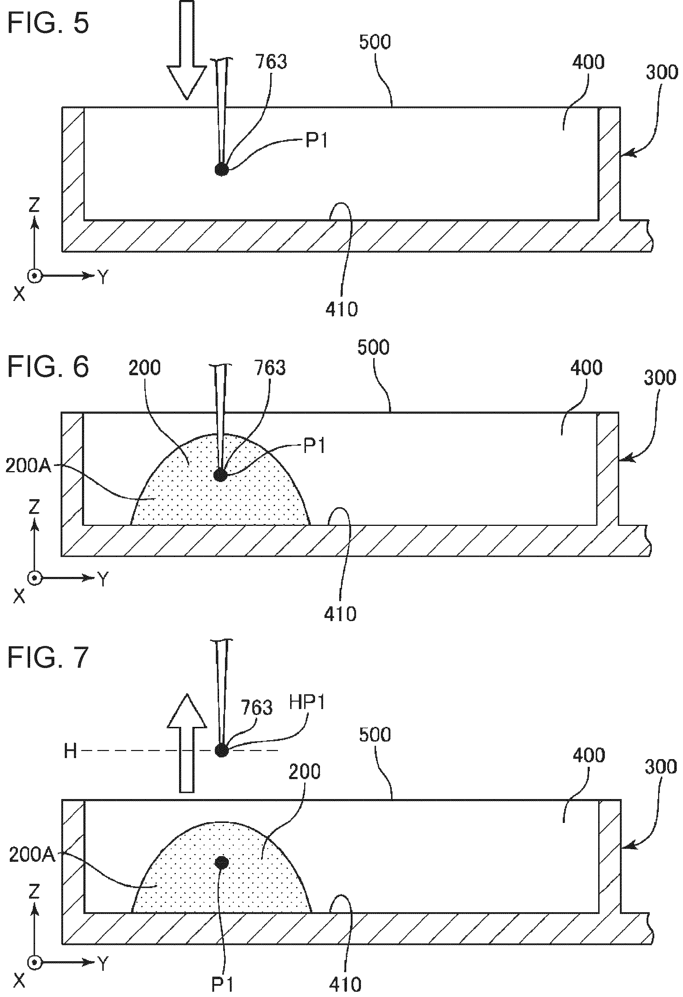

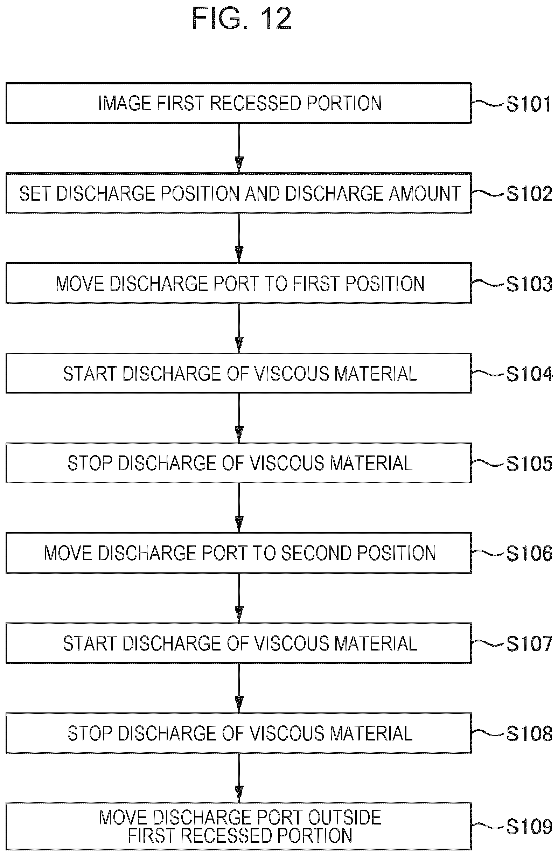

FIG. 1 is a schematic configuration diagram of a robot system according to a first embodiment of the present disclosure. FIG. 2 is a block diagram of the robot system illustrated in FIG. 1. FIG. 3 is a diagram illustrating an example of a hardware configuration of the robot system illustrated in FIG. 1. FIG. 4 is a side view of a discharge unit included in the robot system illustrated in FIG. 1. FIGS. 5 to 11 are cross-sectional side views illustrating states in which the filling method according to the first embodiment of the present disclosure is executed. FIG. 12 is a flowchart for explaining the filling method according to the first embodiment of the present disclosure.

It should be noted that an up-down direction in FIG. 1 coincides with a vertical direction, and an upper side is referred to as "upper" or "upward" and a lower side is referred to as "lower" or "downward" in FIG. 1. The same applies to FIGS. 4 to 11 and 13. Regarding a robot arm 72, a first arm 73, and a second arm 74, a right side in FIG. 1 is referred to as a "base end", and a left side is referred to as a "tip end".

In addition, in FIGS. 1, 5 to 11, and 13, an X axis, a Y axis, and a Z axis are illustrated as three axes orthogonal to each other, and in each axis, a tip end side of an arrow is referred to as a + side, and an opposite side thereof is referred to as a - side. The Z axis is along the vertical direction. The X axis and the Y axis are along the horizontal direction, and the X-Y plane is a horizontal plane parallel to the horizontal direction.

In the description, a term "vertical" means not only a case where a direction is vertical, but also a case where a direction is slightly inclined with respect to the vertical direction, for example, within ±10°. The same applies to "horizontal". In the description, a term "parallel" means not only a case where two objects are parallel to each other, but also a case where two objects are slightly inclined with respect to the parallel direction, for example, within ±10°.

As illustrated in FIGS. 1 and 2, a robot system 1 includes a robot 7 and a robot control device 3 that controls driving of each portion of the robot 7. The robot system 1 executes a filling method (a method of supplying a viscous material) of the present disclosure and specifically performs an operation of filling (supplying) a first recessed portion 400 of a work 300, which will be described later, with a viscous material 200.

First, the configuration of the robot 7 will be described.

The robot 7 in the present embodiment is a SCARA robot, and is used in various operations such as holding, transporting, assembling, processing, coating, and inspecting a work such as an electronic component or a component to be processed. However, the use and type of operation of the robot 7 are not limited to those described above. In addition, the robot 7 may be, for example, a six-axis articulated robot or a double-arm robot other than the SCARA robot.

As illustrated in FIG. 1, the robot 7 includes a base 71 and a robot arm 72 rotatably connected to the base 71. The robot arm 72 includes a first arm 73 including a base end connected to the base 71 and rotating around a first rotation axis J1 in a vertical direction with respect to the base 71, and a second arm 74 including a base end connected to a tip end of the first arm 73 and rotating around a second rotation axis J2 in a vertical direction with respect to the first arm 73.

Further, as illustrated in FIG. 1, the robot control device 3 is built in the base 71, but, without being limited to such a configuration, the robot control device 3 may be configured separately from the robot 7.

A working head 75 is provided at a tip end of the second arm 74. The working head 75 includes a spline nut 751 and a ball screw nut 752 which are coaxially arranged at the tip end of the second arm 74, and a spline shaft 753 which is inserted through the spline nut 751 and the ball screw nut 752. The spline shaft 753 is rotatable around a third rotation axis J3, which is a central axis of the spline shaft 753, in the vertical direction with respect to the second arm 74, and is movable up and down in a direction along the third rotation axis J3.

A control point TCP is set at a lower end of the spline shaft 753. The control point TCP is a point serving as a reference for controlling the operation of the robot arm 72. The robot control device 3 grasps a position of the control point TCP in a certain coordinate system, and controls driving of a first joint portion 4K, a second joint portion 6K, a first driving mechanism 791, and a second driving mechanism 792 such that the control point TCP is located at a desired position.

The robot 7 includes the first joint portion 4K which rotatably connects the base 71 and the first arm 73, and a motor unit 4 is installed in the first joint portion 4K to rotate the first arm 73 around the first rotation axis J1 with respect to the base 71.

In addition, the robot 7 includes the second joint portion 6K which rotatably connects the first arm 73 and the second arm 74, and a motor unit 6 is installed in the second joint portion 6K to rotate the second arm 74 around the second rotation axis J2 with respect to the first arm 73.

In addition, the robot 7 includes the first driving mechanism 791 that rotates the spline nut 751 to rotate the spline shaft 753 around the third rotation axis J3, and the second driving mechanism 792 that rotates the ball screw nut 752 to move up and down the spline shaft 753 in the direction along the third rotation axis J3, that is, in the vertical direction. The second driving mechanism 792 is installed below the first driving mechanism 791. The first driving mechanism 791 includes a motor 793, and the second driving mechanism 792 includes a motor 794. As illustrated in FIG. 2, the motors 793 and 794 are electrically connected to the robot control device 3. Conducting conditions to the motors 793 and 794, for example, conducting patterns, conducting timings, and conducting amounts are controlled by the robot control device 3.

The motor unit 4 includes a motor 41 and a power transmission mechanism (not illustrated) including, for example, a decelerator. The motor unit 6 includes a motor 61 and a power transmission mechanism (not illustrated) including, for example, a decelerator.

The motor 41 generates a driving force for rotating the first arm 73 with respect to the base 71. The motor 61 generates a driving force for rotating the second arm 74 with respect to the first arm 73. The motors 41 and 61 are not particularly limited, but are preferably servo motors, for example, AC servo motors or DC servo motors.

As illustrated in FIG. 2, the motors 41 and 61 are electrically connected to the robot control device 3. Although not illustrated, each of the motors 41 and 61 includes a stator, a rotor that rotates inside the stator, and a housing that houses these components. The stator is disposed along an inner periphery of the housing and has windings such as three-phase windings. The stator generates a magnetic field by supplying a current to the windings, for example, by supplying a three-phase AC. In the motors 41 and 61, conducting patterns, conducting timings, and conducting amounts to the windings provided in the stator are controlled by the robot control device 3.

Each of the motors 793, 794, 41, and 61 includes a built-in motor driver (not illustrated).

The motors 793 and 794 may be similar to the motors 41 and 61, or may be motors with different types or configurations.

The power transmission mechanism in each of the motor units 4 and 6 transmits a driving force of a motor, which is a power source, to an adjacent arm, and includes at least one of a decelerator, a pulley, and an endless belt, for example. The decelerator is not particularly limited, and a decelerator of an eccentric oscillation type, a planetary gear type, a wave gear type, or the like can be used.

A discharge unit 76 for discharging the viscous material 200 is provided at the lower end portion of the spline shaft 753. As illustrated in FIGS. 1 and 4, the discharge unit 76 constitutes a so-called dispenser, and includes a syringe portion 761, a needle portion 762, a discharge port 763, and a pressurizing portion (air filling portion) for filling the syringe portion 761 with air or the like to pressurize and push out the viscous material 200 in the syringe portion 761 from the discharge port 763.

The pressurizing portion is not limited to having the above-described configuration, and may have a configuration in which, for example, instead of air, another working fluid such as water or oil is poured into the syringe portion 761 and pressurized to discharge the viscous material 200 from the discharge port 763, or a configuration in which the syringe portion 761 has a plunger (piston) (not illustrated) inserted therein and the plunger is driven to move downward in FIG. 4 to pressurize and discharge the viscous material 200 in the syringe portion 761 from the discharge port 763.

As illustrated in FIG. 4, the syringe portion 761 is a container having a space for accommodating the viscous material 200 of a liquid state. The needle portion 762 constitutes a nozzle for discharging the viscous material 200, and in the present embodiment, has a hollow linear needle for discharging the viscous material 200 that is in the syringe portion 761. Therefore, the tip end of the needle portion 762 is smaller than an opening surface 500 of the first recessed portion 400. The needle portion 762 is detachably attached to the syringe portion 761. The discharge port 763 opened outward is provided at the tip end (lower end in the drawing) of the needle portion 762, and an internal space connected to the discharge port 763 is provided in the needle portion 762. The viscous material 200 passes through the internal space of the needle portion 762 and is discharged from the discharge port 763. That is, the discharge unit 76 discharges a predetermined amount of the viscous material 200 that is in the syringe portion 761 from the discharge port 763 provided at the tip end of the needle portion 762 at a predetermined speed by filling the syringe portion 761 with air by a pressurizing portion (not illustrated).

The discharge speed, discharge amount, discharge timing, and the like of the viscous material 200 from the discharge port 763 can be adjusted by air filling amount and pressure by the pressurizing portion.

The position of the discharge port 763 and the position of the control point TCP are associated with each other, and information on the positional relationship therebetween is stored in a storage unit 36 of the robot control device 3 as illustrated in FIG. 2. Therefore, the robot control device 3 can move the discharge port 763 to a desired position by controlling the operation of the robot arm 72 with reference to the control point TCP.

The "position of the discharge port 763" refers to the center of an opening surface of the discharge port 763. The opening surface is a virtual plane including an edge portion of the opening when the discharge port 763 is viewed in plan view from the outside along the direction in which the needle extends. In the present embodiment, since the discharge port 763 has a circular shape, the "position of the discharge port 763" is the center of the circle. However, without being limited thereto, the "position of the discharge port 763" may be shifted from the center as long as it is within the plane of the opening surface of the discharge port 763.

In the present embodiment, the discharge unit 76 has one discharge port 763, but without being limited thereto, may have a plurality of discharge ports 763. For example, the discharge unit 76 may have two discharge ports 763 adjacent to each other in the X axis direction or the Y axis direction, and may be configured to discharge the viscous material 200 having the same composition or different compositions from the respective discharge ports 763.

The viscous material 200 is in the form of a liquid material having a relatively high viscosity as compared with water, a semi-solid material, a resin in an uncured state, a semicured state, a molten state, or a softened state, rubber, or the like. The use and type of the viscous material 200 are not particularly limited, and examples thereof include uncured adhesives, fillers, sealants, abrasives, coating materials, various pastes, various pre-fired materials (precursors), various oils, greases, liquid rubbers, wiring materials, semiconductor materials, insulating materials, various cosmetics (including waxes, creams, emulsions, shampoos, gels, toothpastes, and the like), and various foods (including lard, butter, margarine, mayonnaise, ketchup, mustard, syrup, cream, honey, edible oil, condensed milk, jelly, miso, and the like). The composition of the viscous material 200, particularly the main constituent material thereof, is not particularly limited, and examples thereof include various polymer materials, aqueous dispersions, ceramics, and carbon materials, and the like.

The color of the viscous material 200 is not particularly limited, and may be any color such as a chromatic color, an achromatic color, a metallic color, a transparent color, or a translucent color.

The viscosity of the viscous material 200 is not particularly limited, but is preferably 1 cps or more and 10000 cps or less, and more preferably 10 cps or more and 3000 cps or less at 23°C. Accordingly, the effect of the present disclosure described below can be more remarkably exhibited.

Next, the work 300 will be described.

As illustrated in FIGS. 1 and 5 to 11, the work 300 has a first recessed portion 400 that is open to a main surface side positioned on the + Z axis side. The first recessed portion 400 is a region enclosed by a main surface and recessed further toward the - Z axis side than the main surface, or a region enclosed by a protruding portion or the like protruding toward the + Z axis side and constituting the main surface, and has a bottom surface 410 at the lower end thereof and an opening surface 500 at the upper end thereof.

An entire shape of the work 300 is not particularly limited, and examples thereof include a block shape, a flat plate shape, and a bottomed cylindrical shape. The work 300 itself may be a container having the first recessed portion 400.

In the present embodiment, the first recessed portion 400 has a rectangular shape extending in the Y axis direction in plan view of the opening surface 500 as viewed in the Z axis direction (hereinafter referred to as "plan view"). Further, a width and a depth of the first recessed portion 400 are constant along the Y axis direction. However, without being limited to such a configuration, the first recessed portion 400 may have a portion in which at least either the width or the depth is not constant along the Y axis direction.

The bottom surface 410 of the first recessed portion 400 is a flat surface parallel to the X-Y plane in the present embodiment. However, without being limited to such a configuration, the bottom surface 410 may be a curved convex surface protruding in the + Z axis direction, a curved concave surface, or a surface partially including these surfaces, or the like. Further, the bottom surface 410 of the first recessed portion 400 may be a smooth surface or a rough surface.

The opening surface 500 of the first recessed portion 400 is a virtual plane including an edge portion of the opening in plan view, and coincides with the main surface of the first recessed portion 400. However, without being limited to such a configuration, the opening surface 500 of the first recessed portion 400 may not coincide with the main surface of the first recessed portion 400.

The type, shape, use, and the like of the work 300 are not particularly limited, and examples of the work 300 include ornaments or the like, such as accessories as a nameplate, a name tag, a broach, or a pendant head, and by the operation of the robot 7, an adhesive, a filler, or a coating material is applied in the first recessed portion 400 of the work 300.

An area of the first recessed portion 400 formed in the work 300 in plan view is not particularly limited, but is preferably 0.2 cm² or more and 5 cm² or less, and more preferably 0.5 cm² or more and 3 cm² or less.

The depth, particularly the average depth, of the first recessed portion 400 formed in the work 300 is not particularly limited, but is preferably 0.5 mm or more and 10 mm or less, and more preferably 1 mm or more and 5 mm or less.

Such a work 300 is arranged at a predetermined position in a movable region of the robot 7, that is, in a movable region of the discharge port 763. Further, the work 300 is arranged so that the first recessed portion 400 is at a determined position. The arrangement position of the work 300 is specified by a predetermined coordinate system, for example, a robot coordinate system, and a coordinate position thereof is stored in advance in the storage unit 36 of the robot control device 3. The coordinate position refers to a position of the X axis, a position of the Y axis, and a position of the Z axis in the robot coordinate system.

The arrangement position of the work 300 may not be stored in advance in the storage unit 36 of the robot control device 3. In this case, the filling method of the present disclosure can be executed more smoothly and more appropriately by the operation of the robot arm 72 while imaging the work 300 by an imaging unit 77 to be described below.

As illustrated in FIG. 1, the imaging unit 77 is provided at the tip end of the second arm 74. The imaging unit 77 images the - Z axis side, that is, a lower end portion of the spline shaft 753 and the periphery thereof, and acquires a captured image. In addition, the imaging unit 77 images the entire work 300 therebelow in plan view, in particular, images the entire first recessed portion 400 in plan view.

As illustrated in FIG. 2, the imaging unit 77 is electrically connected to the robot control device 3, and information of the captured image captured by the imaging unit 77 is transmitted to the robot control device 3 as an electric signal, and a predetermined process is performed.

As the imaging unit 77, for example, a camera including an imaging element such as a charge coupled device (CCD) or a complementary metal oxide semiconductor (CMOS) can be used. Further, the imaging unit 77 may be a 3D camera that acquires depth information.

As illustrated in FIG. 2, the robot control device 3 includes, as a functional unit 30, an imaging control unit 31, a path setting unit 32, a discharge amount setting unit 33, a drive controller 34, a discharge amount control unit 35, and the storage unit 36.

The imaging control unit 31 has a function of controlling the operation of the imaging unit 77. The imaging control unit 31 captures an image of the first recessed portion 400 of the work 300 by using the imaging unit 77 and acquires a captured image. The acquired captured image is stored in the storage unit 36.

The path setting unit 32 has a function of setting a position of the control point TCP, that is, a position of the discharge port 763 over time when the filling method of the present disclosure is executed, and setting a movement path of the discharge port 763. Hereinafter, as illustrated in FIGS. 5 to 11, an example will be described in which the discharge port 763 is positioned at a first position P1, moves from that state to a first upper position HP1 which is one of upper positions at an upper height H, horizontally moves to a second upper position HP2 which is also one of upper positions directly above a second position P2 at the height H, and moves downward to the second position P2. In the series of operations, the viscous material 200 is discharged from the discharge port 763 at the first position P1 and the second position P2. That is, each of the first position P1 and the second position P2 is a discharge position.

As will be described later, the path setting unit 32 sets position information about a movement path of the discharge port 763 including the first position P1 and the second position P2 in the first recessed portion 400 of the work 300 and the first and second upper positions HP1 and HP2 above the first recessed portion 400 and stores the position information in the storage unit 36 as an operation program. The operation program also includes information about an order of positions to pass through.

The path setting unit 32 sets the X axis direction and the Y axis direction at the first position P1 and the second position P2 based on the captured image captured by the imaging control unit 31. For example, the path setting unit 32 specifies a plan view shape of the first recessed portion 400 in the captured image, and sets a plurality of (two in the illustrated configuration) discharge positions (the first position P1 and the second position P2). In a case where two discharge positions are set, the discharge positions can be intersections of line segments that divide the shape of the first recessed portion 400 in plan view into three equal sections in the longitudinal direction and into two equal sections in the width direction.

The number of discharge positions in the first recessed portion 400 may be set in advance or may be configured to be set according to the shape and the size of the first recessed portion 400.

The positions in the Z axis direction in the first position P1 and the second position P2 may be coordinate positions input by a user, or may be set based on the captured image when the captured image has depth information. In a case where the captured image has depth information, for example, a midpoint of the depth of the first recessed portion 400 can be set as the positions in the Z axis direction. However, without being limited to such a configuration, the positions in the Z axis direction may be positions other than the midpoint of the depth of the first recessed portion 400.

The first position P1 and the second position P2 are positions different from each other in plan view of the first recessed portion 400, and are shifted at least in one of the X axis direction or the Y axis direction. In the present embodiment, the first position P1 and the second position P2 are shifted in the Y axis direction, and the positions in the X axis direction are the same.

However, without being limited to such a configuration, the first position P1 and the second position P2 may be shifted in the X axis direction, and the positions in the Z axis direction may be different from each other.

As illustrated in FIGS. 5 to 10, the first position P1 and the second position P2 are separated upward from the bottom surface 410 of the first recessed portion 400 by a predetermined distance. A separation distance of the first position P1 and the second position P2 from the bottom surface 410 is not particularly limited, but are preferably 1 mm or more and 20 mm or less, and more preferably 3 mm or more and 10 mm or less. At least either the first position P1 or the second position P2 may be on the bottom surface 410. That is, a separation distance from the bottom surface 410 may be 0.

In addition, the path setting unit 32 sets the height h of the first and second upper positions HP1 and HP2 above the first recessed portion 400, that is, above the opening surface 500 of the first recessed portion 400.

As a method of setting the height H, in a case where a captured image has depth information, the height H can be set to a position above the opening surface 500 of the first recessed portion 400 by a predetermined distance. The predetermined distance (the position of the height H) may be a value set in advance, or may be appropriately set based on conditions such as a type, composition, and viscosity of the viscous material 200 and a discharge amount per unit time.

Note that the method of setting the movement path of the discharge port 763 by the path setting unit 32 is not limited to that described above. The positions in the X axis direction and the Y axis direction in the first position P1 and the second position P2 and the positions in the Z axis direction in the first upper position HP1 and the second upper position HP2 may be set by a user. In this case, the user inputs values of various coordinates using an input device (not illustrated).

The discharge amount setting unit 33 sets a discharge amount per unit time and a discharge time at each of the first position P1 and the second position P2. For the viscous material 200 whose type, composition, viscosity, and the like are specified, these settings are made based on, for example, a volume of the first recessed portion 400. The information of the volume of the first recessed portion 400 may be input by a user or may be obtained from a captured image.

In addition, the discharge amount setting unit 33 may be configured to set the discharge amount per unit time and the discharge time at each of the first position P1 and the second position P2 based on the input of a user.

The drive controller 34 has a function of reading a program stored in the storage unit 36 and driving the robot arm 72.

The discharge amount control unit 35 controls the operation of the pressurizing portion (air filling portion) (not illustrated) of the discharge unit 76, and controls a discharge amount, a discharge speed, a discharge timing, and the like of the viscous material 200.

The storage unit 36 stores a filling program of the present disclosure for executing a filling method of the present disclosure. The filling program includes a program for the imaging control unit 31, the path setting unit 32, the discharge amount setting unit 33, the drive controller 34, and the discharge amount control unit 35 to execute a control operation as described above.

The functional unit 30 of the robot control device 3 can be implemented as, for example, a hardware configuration as illustrated in FIG. 3. The robot control device 3 includes at least one processor, a memory, and an I/O interface. The control unit, the storage unit, and the communication unit are communicably connected to each other via, for example, a bus.

The processor is constituted by, for example, a central processing unit (CPU), and reads and executes various programs stored in the memory.

The memory stores various programs and the like executed by the processor. Examples of the memory include a volatile memory such as a random access memory (RAM), a non-volatile memory such as a read only memory (ROM), and a detachable external storage device.

The I/O interface corresponds to a communication unit such as a wired local area network (LAN) or a wireless LAN. Accordingly, the robot control device 3 transmits and receives signals to and from each unit of the robot 7 or an external device such as a teaching device or the like (not illustrated). In this case, the communication may be performed via a server (not illustrated), or via a network such as the Internet.

The first recessed portion 400 of the work 300 is filled with the viscous material 200 by using such a robot system 1. In this filling, the robot control device 3 performs the following control.

First, the robot arm 72 is operated to move downward the syringe portion 761 and the needle portion 762 located above the work 300 such that the discharge port 763 is positioned at the first position P1 in the first recessed portion 400 as illustrated in FIG. 5.

Next, as illustrated in FIG. 6, at the first position P1, a discharge of the viscous material 200 from the discharge port 763 is started, continued for a predetermined time, and then stopped. That is, a predetermined amount of the viscous material 200 is discharged for a predetermined time, and a droplet 200A of the viscous material 200 is formed on the bottom surface 410 of the first recessed portion 400. Since the viscous material 200 has a relatively high viscosity, the droplet 200A of the viscous material 200 rises (accumulates) to a relatively high position in the Z axis direction, and maintain the shape for a while. Therefore, the discharge port 763 is often buried in the droplet 200A.

Next, the robot arm 72 is operated to move the syringe portion 761 and the needle portion 762 upward, and as illustrated in FIG. 7, the discharge port 763 is positioned above the first recessed portion 400, that is, at the first upper position HP1 at the height H further on the + Z axis side than the opening surface 500. Accordingly, the discharge port 763 can be raised to a sufficient height, the discharge port 763 can be brought into a state of not being in contact with the droplet 200A of the viscous material 200, and it is possible to reduce the viscous material 200 in the discharge unit 76 being pulled downward and unintentionally discharged due to a surface tension of the viscous material 200. In addition, by moving the discharge port 763 to the height H further on the + Z axis side than the opening surface 500, it is possible to reduce the viscous material 200 being in a state of drawing a thread between the discharge port 763 and the droplet 200A.

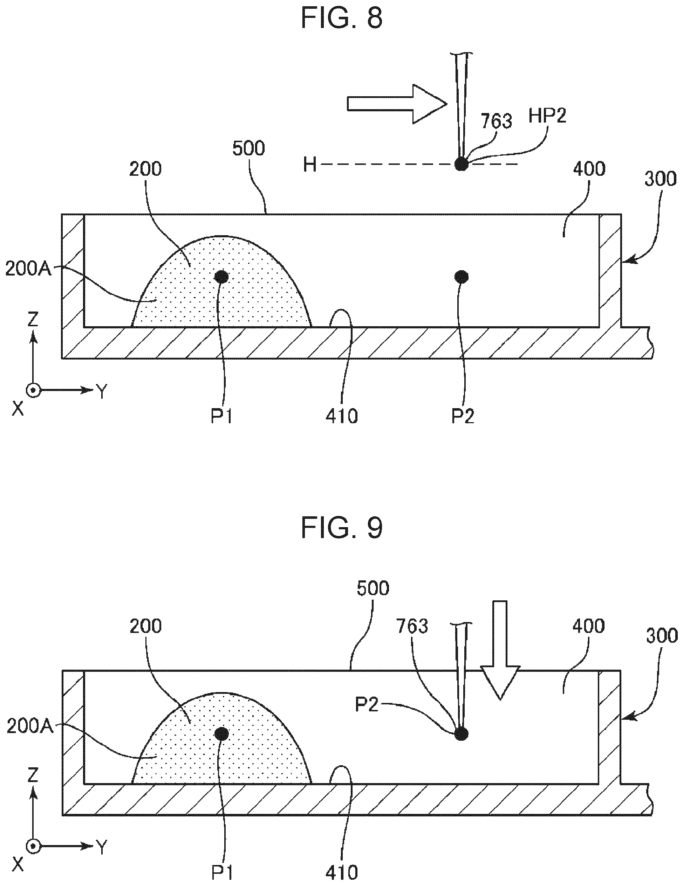

Next, as illustrated in FIG. 8, at the height H, the discharge port 763 is moved horizontally, that is, in the + Y axis direction, such that the discharge port 763 is in a state of being positioned at the second upper position HP2 above the second position P2, and then the robot arm 72 is operated to move downward the syringe portion 761 and the needle portion 762 such that the discharge port 763 is positioned at the second position P2 as illustrated in FIG. 9.

By such an operation, in the first recessed portion 400, the discharge port 763 can be positioned at the second position P2 different from the first position P1 in plan view of the first recessed portion 400, that is, at the second position P2 being shifted by a predetermined distance in the Y axis direction.

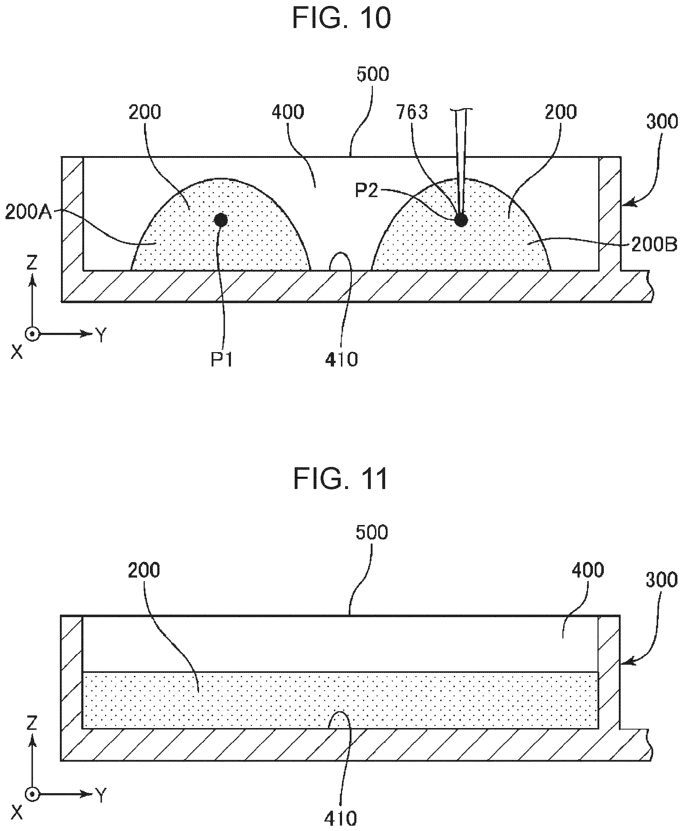

Next, as illustrated in FIG. 10, at the second position P2, a discharge of the viscous material 200 from the discharge port 763 is started, continued for a predetermined time, and then stopped. That is, a predetermined amount of the viscous material 200 is discharged for a predetermined time, and a droplet 200B of the viscous material 200 is formed on the bottom surface 410 of the first recessed portion 400. Similarly to the droplet 200A, the droplet 200B rises to a relatively high position in the Z axis direction, and maintain the shape for a while. A size (liquid amount) of the droplet 200A and the droplet 200B may be the same or different.

Next, the robot arm 72 is operated to move the syringe portion 761 and the needle portion 762 upward, and the discharge port 763 is removed from inside of the first recessed portion 400.

In this way, the droplet 200A and the droplet 200B are formed at positions different from each other in the first recessed portion 400. Although it depends on the viscosity of the viscous material 200 and the wettability of the first recessed portion 400, the droplet 200A and the droplet 200B usually spread in the first recessed portion 400 with the elapse of time as illustrated in FIG. 11, and the first recessed portion 400 is filled with the viscous material 200.

According to such a filling method, a desired amount of the droplet 200A and the droplet 200B is formed at a plurality of desired positions in the first recessed portion 400, and then each of the droplet 200A and the droplet 200B spreads in the first recessed portion 400. Therefore, it is possible to fill the entire region of the first recessed portion 400 with a more uniform amount of the viscous material 200. In particular, in the present disclosure, after the discharge of the viscous material 200 is stopped at the first position P1, the discharge port 763 is moved to the second position P2 with the discharge stopped, and after that, the viscous material 200 is discharged again. Therefore, compared to a case where the discharge port 763 is moved while discharging the viscous material 200, each of the droplet 200A and the droplet 200B can be prevented from excessively rising in the Z axis direction, and the viscous material 200 can be prevented from riding up on the main surface and protruding to the outside of the first recessed portion 400 due to excessive rising, and can be prevented from spreading in an unintended direction. In addition, when the discharge port 763 is in contact with the droplet, particularly when buried in the droplet, there is a possibility that the viscous material 200 in the discharge unit 76 is pulled downward due to the surface tension of the viscous material 200, causing a possibility of unintentional discharge, for example, a discharge exceeding an appropriate amount. However, in the present disclosure, such a situation can also be prevented or reduced by temporarily moving the discharge port 763 to the first and second upper positions HP1 and HP2 above the first recessed portion 400. Thus, by the filling method of the present disclosure, it is possible to fill the work 300 with the viscous material 200 with high accuracy, and it is possible to reduce additional work due to excess or deficiency of the viscous material 200 and efficiently fill the work 300 with the viscous material 200. Furthermore, since the droplet 200B is formed without waiting for the droplet 200A to spread after the droplet 200A is formed, the time can be effectively used, and the working time is possible to be shortened. As described above, according to the present disclosure, the first recessed portion 400 can be efficiently filled with an appropriate amount of the viscous material 200.

Further, in the present embodiment, when the discharge port 763 is moved from the first position P1 to the second position P2, as described above, (1) ascent along the vertical direction, (2) movement in the horizontal direction, and (3) descent along the vertical direction are sequentially done by performing a so-called gate motion (an action pattern in which the discharge port 763 moves in a gate shape from the first position P1 to the first upper position HP1, the second upper position HP2, and the second position P2). By raising the discharge port 763 along the vertical direction as indicated by (1), that is, by moving the discharge port 763 to the + Z axis side, the discharge port 763 can be quickly separated from a droplet which is lowered to the - Z axis side with the elapse of time.

Further, in the present disclosure, a so-called arch motion (an action pattern in which the discharge port 763 does not pass through the first and second upper positions HP1 and HP2 but moves from the first position P1 to the second position P2 in an arch shape, that is, while drawing an arc, moves obliquely upward and obliquely downward) may be performed, in which movements of the second half of the above-described (1) and the first half of the above-described (2) overlap temporally, and movements of the second half of the above-described (2) and the first half of the above-described (3) overlap temporally. In this case, the discharge port 763 may be moved to any of upper positions having the height H in the path from the first position P1 to the second position P2, and may be moved to the upper position, for example, in a middle between the first position P1 and the second position P2 in plan view. In the case of such an operation, since upper positions are fewer in number, the movement time can be shortened, and when a teaching of upper positions is required, the labor of teaching can be reduced.

By such a gate motion or an arch motion, it is possible to more reliably prevent the viscous material 200 from protruding to the outside of the first recessed portion 400 or spreading in an unintended direction, compared to a case where the discharge port 763 moves while being buried in the droplet 200A or a case where the discharge port 763 moves while discharging the viscous material 200.

As described above, the robot system 1 includes: a robot 7 having a robot arm 72 and a discharge unit 76 provided at a tip end of the robot arm 72 and having a discharge port 763 for discharging a viscous material 200; and a robot control device 3 configured to control an operation of the robot 7. The robot system 1 discharges the viscous material 200 at a first position P1 and a second position P2 in a first recessed portion 400 of a work 300 having the first recessed portion 400, the second position P2 being different from the first position P1 in plan view of the first recessed portion 400 and fills the first recessed portion 400 with the viscous material 200. The robot control device 3 is configured to move the discharge port 763 to the first position P1 in the first recessed portion 400, start a discharge of the viscous material 200 from the discharge port 763 at the first position P1, stop the discharge of the viscous material 200 after the discharge of the viscous material 200 is started, move the discharge port 763 above the first recessed portion 400 in a state where the discharge of the viscous material 200 is stopped, move the discharge port 763 to the second position P2 in the first recessed portion 400 in a state where the discharge of the viscous material 200 is stopped, by moving the discharge port 763 in the horizontal direction and then moving the discharge port 763 downward along the vertical direction, or by moving the discharge port 763 obliquely downward, and start the discharge of the viscous material 200 from the discharge port 763 at the second position P2. Thus, the first recessed portion 400 can be efficiently filled with an appropriate amount of the viscous material 200.

In the above embodiment, a case where the viscous material 200 is discharged at two positions of the first position P1 and the second position P2 has been described as an example, but the present disclosure is not limited thereto, and the viscous material 200 may be discharged at, for example, three or more positions. When the viscous material 200 is discharged at three or more positions, any two positions at which the viscous material 200 is successively discharged can be regarded as a first position P1 and a second position P2.

Further, at a position other than the first position P1 and the second position P2 within the first recessed portion 400, the viscous material 200 may be discharged while the discharge port 763 is moved horizontally. This is effective when the area of the bottom surface 410 of the first recessed portion 400 is large.

In addition, although a configuration in which the discharge port 763 is moved after the discharge of the viscous material 200 from the discharge port 763 is stopped has been described, the present disclosure is not limited thereto, and the discharge port 763 may be moved before the discharge of the viscous material 200 from the discharge port 763 is stopped.

Further, as illustrated in FIG. 11, after the viscous material 200 spreads in the first recessed portion 400 and the filling is completed, the robot arm 72 may be operated so as to stir the viscous material 200 by the needle portion 762. Thus, even when air bubbles are present in the viscous material 200, the air bubbles can be removed from the viscous material 200.

Next, an example of the filling method of the present disclosure will be described with reference to a flowchart shown in FIG. 12. Hereinafter, description will be given after a work 300 is arranged in a predetermined orientation at a predetermined position in a movable region of the robot 7, that is, in a movable region of the discharge port 763.

First, in step S101, the first recessed portion 400 of the work 300 is imaged by the use of the imaging unit 77, and a captured image of the first recessed portion 400 viewed from the Z axis direction is acquired. This step is executed by the imaging control unit 31.

Next, in step S102, two discharge positions and a discharge amount at each discharge position are set. Specifically, as described above, the path setting unit 32 sets the first position P1 and the second position P2, and the discharge amount setting unit 33 sets the respective discharge amounts at the first position P1 and the second position P2. The setting of the discharge amount at each discharge position may be set separately from the setting of the discharge position, and may be set, for example, in advance.

After such setting is completed, filling of the viscous material 200 into the first recessed portion 400 is started.

First, in step S103, the robot arm 72 is operated to move the discharge port 763 to the first position P1 (see FIG. 5). That is, the discharge port 763 is positioned at the first position P1 in the first recessed portion 400.

Next, in step S104, the discharge unit 76 is operated to start a discharge of the viscous material 200 (see FIG. 6). After a predetermined amount of the viscous material 200 is discharged, the discharge of the viscous material 200 is stopped in step S105. In this way, the discharge of the viscous material 200 from the discharge port 763 is started, and stopped after the predetermined amount (for a predetermined time) is discharged, and a droplet 200A is formed on the bottom surface 410 of the first recessed portion 400.

Next, in step S106, the discharge port 763 is moved to the second position P2. That is, first, the discharge port 763 is moved to the first upper position HP1 at the height H above the opening surface 500 of the first recessed portion 400 (see FIG. 7), then the discharge port 763 is moved horizontally (in the + Y axis direction) while being positioned at the height H, the discharge port 763 is moved to the second upper position HP2 above the second position P2 (see FIG. 8), and then the discharge port 763 is moved downward to be positioned at the second position P2 (see FIG. 9).

Next, in step S107, the discharge unit 76 is operated to start a discharge of the viscous material 200 (see FIG. 10). After the predetermined amount of the viscous material 200 is discharged, the discharge of the viscous material 200 is stopped in step S108. In this way, the discharge of the viscous material 200 from the discharge port 763 is started, and stopped after the predetermined amount (for a predetermined time) is discharged, and a droplet 200B is formed on the bottom surface 410 of the first recessed portion 400.

Next, in step S109, the discharge port 763 is raised to the second upper position HP2 at the height H, for example, and the discharge port 763 is moved to the outside of the first recessed portion 400. Thereafter, as illustrated in FIG. 11, the droplet 200A and the droplet 200B spread in the first recessed portion 400 with the elapse of time, and a predetermined section, particularly almost an entire region in the first recessed portion 400 is uniformly filled with the viscous material 200.

As described above, the filling method of the present disclosure is a filling method, by using a robot 7 having a robot arm 72 and a discharge unit 76 provided at a tip end of the robot arm 72 and having a discharge port 763 for discharging a viscous material 200, for discharging the viscous material 200 at a first position P1 and a second position P2 in a first recessed portion 400 of a work 300 having the first recessed portion 400, the second position P2 being different from the first position P1 in plan view of the first recessed portion 400, and filling the first recessed portion 400 with the viscous material 200. The filling method includes moving, by the robot arm 72, the discharge port 763 to the first position P1 in the first recessed portion 400, starting a discharge of the viscous material 200 from the discharge port 763 at the first position P1, stopping the discharge of the viscous material 200 after the discharge of the viscous material 200 is started, moving, by the robot arm 72, the discharge port 763 above the first recessed portion 400 in a state where the discharge of the viscous material 200 is stopped, moving, by the robot arm 72, the discharge port 763 to the second position P2 in the first recessed portion 400 in a state where the discharge of the viscous material 200 is stopped, the robot arm 72 moving the discharge port 763 in the horizontal direction and then moving the discharge port 763 downward along the vertical direction or moving the discharge port 763 obliquely downward, and starting the discharge of the viscous material 200 from the discharge port 763 at the second position P2. Thus, the first recessed portion 400 can be efficiently filled with an appropriate amount of the viscous material 200.

As described above, the filling program of the present disclosure is a filling program for executing a filling method, by using a robot 7 having a robot arm 72 and a discharge unit 76 provided at a tip end of the robot arm 72 and having a discharge port 763 for discharging a viscous material 200, for discharging the viscous material 200 at a first position P1 and a second position P2 in a first recessed portion 400 of a work 300 having the first recessed portion 400, the second position P2 being different from the first position P1 in plan view of the first recessed portion 400, and filling the first recessed portion 400 with the viscous material 200. The robot arm 72 moves the discharge port 763 to the first position P1 in the first recessed portion 400, at the first position P1, a discharge of the viscous material 200 from the discharge port 763 is started, after the discharge of the viscous material 200 is started, the discharge of the viscous material 200 is stopped, in a state where the discharge of the viscous material 200 is stopped, the robot arm 72 moves the discharge port 763 above the first recessed portion 400, in a state where the discharge of the viscous material 200 is stopped, the robot arm 72 moves the discharge port 763 to the second position P2 in the first recessed portion 400 by moving the discharge port 763 in the horizontal direction and then moving the discharge port 763 downward along the vertical direction, or by moving the discharge port 763 obliquely downward, and at the second position P2, a discharge of the viscous material 200 from the discharge port 763 is started. By executing such a filling program, the first recessed portion 400 can be efficiently filled with an appropriate amount of the viscous material 200.

The filling program is stored in the storage unit 36 of the robot control device 3, but the present disclosure is not limited thereto, and a part or all of the filling program may be stored in a storage unit other than the storage unit 36 of the robot control device 3, for example, a storage unit of a teaching device (not illustrated) or a storage unit included in a server (not illustrated).

As described above, the first position P1 and the second position P2 are specified based on the shape of the first recessed portion 400 in plan view. Accordingly, it is possible to more appropriately set the positions of the first position P1 and the second position P2 with respect to the shape of the first recessed portion 400 in plan view, the discharge amount of the viscous material 200 at each of the first position P1 and the second position P2, and the like. As a result, the viscous material 200 discharged at each of the first position P1 and the second position P2 can easily spread throughout the entire region of the first recessed portion 400. Therefore, the first recessed portion 400 can be more uniformly and more quickly filled with the viscous material 200.

The first position P1 and the second position P2 may not be based on the shape of the first recessed portion 400 in plan view. That is, the first position P1 and the second position P2 may be set without considering the shape of the first recessed portion 400 in plan view.

As described above, the shape of the first recessed portion 400 in plan view is obtained from the captured image that is obtained by capturing the first recessed portion 400. Thus, the shape of the first recessed portion 400 in plan view can be grasped more accurately by a simple method. Therefore, the first recessed portion 400 can be more uniformly and more quickly filled with the viscous material 200.

The shape of the first recessed portion 400 in plan view may be obtained from, for example, a detection value of a separately installed distance measuring sensor or the like, other than the captured image obtained by capturing the first recessed portion 400. In addition, the shape of the first recessed portion 400 in plan view is stored in advance in the storage unit 36 or a storage unit of a teaching device (not illustrated), and this information may be used.

The discharge amount of the viscous material 200 at the first position P1 and the discharge amount of the viscous material 200 at the second position P2 are set based on at least one of the conditions of the shape and area of the first recessed portion 400 in plan view and the depth of the first recessed portion 400, and based on all the conditions in the present embodiment. Accordingly, each discharge amount of the viscous material 200 at the first position P1 and the second position P2 can be set to a more appropriate discharge amount corresponding to the shape or the like of the first recessed portion 400 in plan view, and it is possible to more uniformly and more quickly fill the first recessed portion 400 with the viscous material 200.

Note that the discharge amount of the viscous material 200 at the first position P1 and the discharge amount of the viscous material 200 at the second position P2 may be set based on one or two of the shape and area of the first recessed portion 400 in plan view and the depth of the first recessed portion 400, or may be set without being based on these.

### Second Embodiment

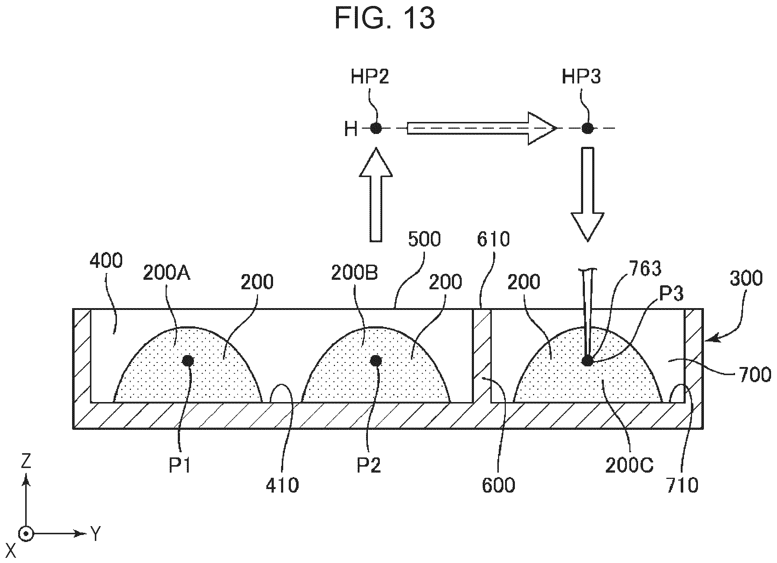

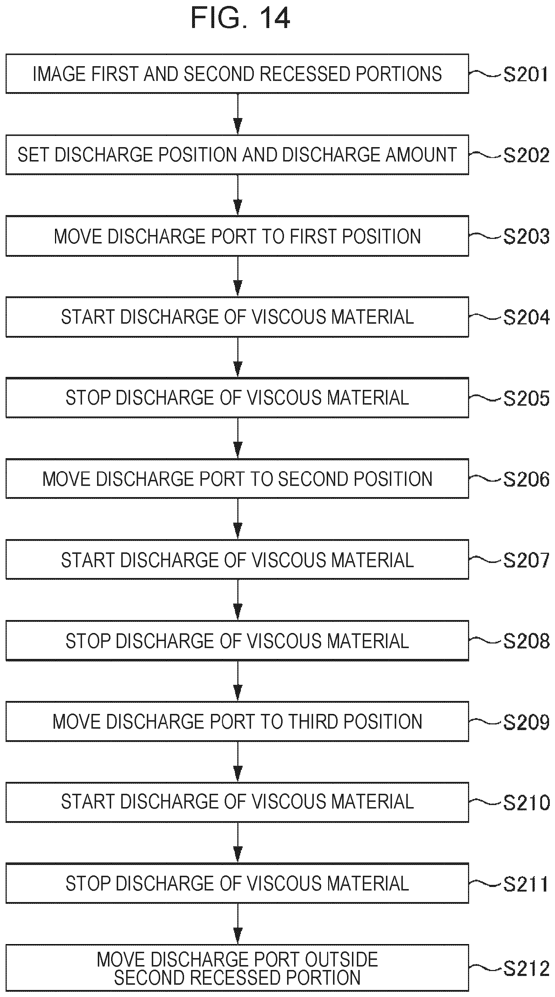

FIG. 13 is a cross-sectional side view illustrating a state in which the filling method according to the second embodiment of the present disclosure is executed. FIG. 14 is a flowchart for explaining the filling method according to the second embodiment of the present disclosure.

Hereinafter, a filling method, a filling program, and a robot system according to the second embodiment of the present disclosure will be described below with reference to FIGS. 13 and 14. Differences from the first embodiment will be mainly described below, and description of the same matters will be omitted.

As illustrated in FIG. 13, a work 300 has a first recessed portion 400 and a second recessed portion 700 adjacent to the first recessed portion 400 with a partition wall 600 in between. The shape of the second recessed portion 700 in plan view is different from that of the first recessed portion 400, and the size (area) thereof is smaller than that of the first recessed portion 400. However, without being limited to such a configuration, the second recessed portion 700 may have the same shape and size (area) in plan view as those of the first recessed portion 400. Alternatively, the second recessed portion 700 may have a portion in which at least either the width or the depth may be different from the first recessed portion 400 along the longitudinal direction.

The area of the second recessed portion 700 formed in the work 300 in plan view is not particularly limited, but is preferably 0.2 cm² or more and 10 cm² or less, and more preferably 0.5 cm² or more and 5 cm² or less.

The depth, particularly the average depth of the second recessed portion 700 formed in the work 300 is not particularly limited, but is preferably 0.5 mm or more and 10 mm or less, and more preferably 1 mm or more and 5 mm or less.

The first recessed portion 400 and the second recessed portion 700 may have the same depth, in particular, the same average depth, or may have different depths.

In such work 300, without being limited to a case where the first recessed portion 400 and the second recessed portion 700 are completely separated from each other by the partition wall 600, the first recessed portion 400 and the second recessed portion 700 may be partially connected to each other.

Hereinafter, an example of the filling method in the present embodiment will be described with reference to a flowchart shown in FIG. 14. Note that steps S201 to S208 shown in FIG. 14 are substantially the same as steps S101 to S108 in the first embodiment, and accordingly, description thereof will be omitted. As differences, in step S201, the second recessed portion 700 is imaged in addition to the first recessed portion 400, and in step S202, a third position P3 is set in the second recessed portion 700. The third position P3 is set in the same manner as the first position P1 and the second position P2 are set.

In the present embodiment, after the viscous material 200 is supplied to the first recessed portion 400, that is, after the discharge of the viscous material 200 from the discharge port 763 at the second position P2 is stopped, the following operation is performed.

In step S209, the discharge port 763 is moved from the second position P2 to the third position P3. In the present embodiment, step S209 is executed by the gate motion. That is, by the operation of the robot arm 72, the discharge port 763 at the second position P2 is moved to the second upper position HP2 above the first recessed portion 400, that is, at the height H, then the discharge port 763 is moved in the + Y axis direction while maintaining the height H, passed above the partition wall 600, and moved to a third upper position HP3 which is one of upper positions above the third position P3 of the second recessed portion 700, and then the discharge port 763 is moved downward to the third position P3 to be positioned at the third position P3.

Accordingly, it is possible to prevent unintentional deformation of the droplet 200B due to a movement of the discharge unit 76 while being buried in the droplet, and to prevent interference between the discharge unit 76 and the partition wall 600 since the discharge port 763 is passed above the partition wall 600. In addition, since the discharge of the viscous material 200 from the discharge port 763 is stopped when the discharge port 763 is moved in the + Y axis direction and passed above the partition wall 600, it is possible to prevent contamination such as adhesion of the viscous material 200 to an upper end surface 610 of the partition wall 600 or the periphery thereof, and scattering of the viscous material 200 to the periphery. The above-described effects cannot be obtained when the discharge unit 76 is of a spray type or when the discharge unit 76 continuously discharges the viscous material 200.

Next, in step S210, the discharge unit 76 is operated to start a discharge of the viscous material 200 at the third position P3 (see FIG. 13). Then, after a predetermined amount (for a predetermined time) of the viscous material 200 is discharged, the discharge of the viscous material 200 is stopped in step S211. In this way, the discharge of the viscous material 200 from the discharge port 763 is started and then stopped to form a droplet 200C on a bottom surface 710 of the second recessed portion 700.

Next, in step S212, the discharge port 763 is raised to the third upper position HP3 at the height H, for example, and the discharge port 763 is moved to the outside of the second recessed portion 700. Thereafter, the droplet 200C spreads in the second recessed portion 700 with the elapse of time, and a predetermined section in the second recessed portion 700, particularly almost an entire region of the second recessed portion 700 is uniformly filled (supplied) with the viscous material 200.

The viscous material 200 discharged into the first recessed portion 400 and the viscous material 200 discharged into the second recessed portion 700 may be the same or different. In the latter case, for example, at least one of the conditions of the viscous material 200, such as use, type, composition, color, viscosity, or the like, is different.

In addition, in a case where different viscous materials 200 are discharged into the first recessed portion 400 and the second recessed portion 700, it is preferable that the discharge unit 76 has a different material supply portion which can supply a plurality of different kinds of viscous materials 200 to the discharge port 763.

As described above, the work 300 has a second recessed portion 700 adjacent to a first recessed portion 400 with a partition wall 600 in between, after a discharge of a viscous material 200 from a discharge port 763 at a second position P2 is started, the discharge of the viscous material 200 is stopped, in a state where the discharge of the viscous material 200 is stopped, a robot arm 72 moves the discharge port 763 above the first recessed portion 400, in a state where the discharge of the viscous material 200 is stopped, the robot arm 72 passes above the partition wall 600 and moves the discharge port 763 above the second recessed portion 700, in a state where the discharge of the viscous material 200 is stopped, the robot arm 72 moves the discharge port 763 to a third position P3 in the second recessed portion 700 by moving the discharge port 763 in the horizontal direction and then moving the discharge port 763 downward along the vertical direction, or by moving the discharge port 763 obliquely downward, and at the third position P3, the discharge of the viscous material 200 from the discharge port 763 is started. Thus, in addition to the first recessed portion 400, the second recessed portion 700 can also be efficiently filled with an appropriate amount of the viscous material 200. In addition, since the discharge port 763 is moved from the second position P2 to the third position P3 by being passed above the partition wall 600 in a state where the discharge of the viscous material 200 is stopped, it is possible to prevent or suppress the viscous material 200 from adhering to the upper end surface 610 of the partition wall 600 or the like or scattering around the first recessed portion 400 and the second recessed portion 700.

Further, according to the present embodiment, it is possible to independently fill (supply) each of the first recessed portion 400 and the second recessed portion 700 with the viscous material 200. In particular, each of the first recessed portion 400 and the second recessed portion 700 can also be filled with different viscous materials 200.

Also in the second recessed portion 700, the viscous material 200 may be sequentially discharged at two or more different positions in plan view. In this case, the movement of the discharge port 763 between the respective positions is the same as that described in the first embodiment.

In addition, in a case where the viscous material 200 is discharged at three or more positions in the first recessed portion 400, a position at which the viscous material is lastly discharged is defined as a second position P2, and a position at which the viscous material is discharged before that is defined as a first position P1.

Further, at a position other than the first position P1 and the second position P2 within the first recessed portion 400, the viscous material 200 may be discharged while the discharge port 763 is moved horizontally.

As illustrated in FIG. 13, similarly to the first position P1 and the second position P2, the third position P3 is separated upward from the bottom surface 710 of the second recessed portion 700 by a predetermined distance. A separation distance of the third position P3 from the bottom surface 710 is not particularly limited, and a preferable value thereof is the same as those of the first position P1 and the second position P2. The third position P3 may be on the bottom surface 710. That is, a separation distance from the bottom surface 710 may be 0.

The filling method, the filling program, and the robot system of the present disclosure have been described based on the illustrated respective embodiments, but the present disclosure is not limited thereto, and the configuration of each section and each process in the filling method, the filling program, and the robot system can be replaced with any configuration and process having the same function. In addition, any other functional units and processes may be added to the filling method, the filling program, and the robot system.

## Claims

1. A filling method, by using a robot having a robot arm and a discharge unit provided at a tip end of the robot arm and having a discharge port for discharging a viscous material, for discharging the viscous material at a first position and a second position in a first recessed portion of a work having the first recessed portion, the second position being different from the first position in plan view of the first recessed portion, and filling the first recessed portion with the viscous material, the filling method comprising:
moving, by the robot arm, the discharge port to the first position in the first recessed portion;
starting a discharge of the viscous material from the discharge port at the first position;
stopping the discharge of the viscous material after the discharge of the viscous material is started;
moving, by the robot arm, the discharge port above the first recessed portion in a state where the discharge of the viscous material is stopped;
moving, by the robot arm, the discharge port to the second position in the first recessed portion in a state where the discharge of the viscous material is stopped, the robot arm moving the discharge port in a horizontal direction and then moving the discharge port downward along a vertical direction, or moving the discharge port obliquely downward; and
starting the discharge of the viscous material from the discharge port at the second position.

2. The filling method according to claim 1, wherein
the work has a second recessed portion adjacent to the first recessed portion with a partition wall in between, and
the filling method further comprises:
stopping the discharge of the viscous material after the discharge of the viscous material from the discharge port at the second position is started;
moving, by the robot arm, the discharge port above the first recessed portion in a state where the discharge of the viscous material is stopped;
moving, by the robot arm, the discharge port above the second recessed portion by passing above the partition wall in a state where the discharge of the viscous material is stopped;
moving, by the robot arm, the discharge port to a third position in the second recessed portion in a state where the discharge of the viscous material is stopped, the robot arm moving the discharge port in the horizontal direction and then moving the discharge port downward along the vertical direction, or by moving the discharge port obliquely downward; and
starting the discharge of the viscous material from the discharge port at the third position.

3. The filling method according to claim 1, wherein
the first position and the second position are specified based on a shape of the first recessed portion in plan view.

4. The filling method according to claim 3, wherein
the shape of the first recessed portion in plan view is obtained from a captured image obtained by imaging the first recessed portion.

5. The filling method according to claim 3, wherein
a discharge amount of the viscous material at the first position and a discharge amount of the viscous material at the second position are set based on at least one of conditions of the shape and an area of the first recessed portion in plan view and a depth of the first recessed portion.

6. A non-transitory storage medium storing a filling program for executing a filling method, by using a robot having a robot arm and a discharge unit provided at a tip end of the robot arm and having a discharge port for discharging a viscous material, for discharging the viscous material at a first position and a second position in a first recessed portion of a work having the first recessed portion, the second position being different from the first position in plan view of the first recessed portion, and filling the first recessed portion with the viscous material, wherein
the robot arm moves the discharge port to the first position in the first recessed portion,
at the first position, a discharge of the viscous material from the discharge port is started,
after the discharge of the viscous material is started, the discharge of the viscous material is stopped,
in a state where the discharge of the viscous material is stopped, the robot arm moves the discharge port above the first recessed portion,
in a state where the discharge of the viscous material is stopped, the robot arm moves the discharge port to the second position in the first recessed portion by moving the discharge port in a horizontal direction and then moving the discharge port downward along a vertical direction, or by moving the discharge port obliquely downward, and
at the second position, the discharge of the viscous material from the discharge port is started.

7. A robot system comprising:
a robot including a robot arm and a discharge unit provided at a tip end of the robot arm and including a discharge port for discharging a viscous material; and
a robot control device configured to control an operation of the robot, the robot system discharging the viscous material at a first position and a second position in a first recessed portion of a work having the first recessed portion, the second position being different from the first position in plan view of the first recessed portion, and filling the first recessed portion with the viscous material, wherein
the robot control device is configured to
move the discharge port to the first position in the first recessed portion,
start a discharge of the viscous material from the discharge port at the first position,
stop the discharge of the viscous material after the discharge of the viscous material is started,
move the discharge port above the first recessed portion in a state where the discharge of the viscous material is stopped,
move the discharge port to the second position in the first recessed portion in a state where the discharge of the viscous material is stopped, by moving the discharge port in a horizontal direction and then moving the discharge port downward along a vertical direction, or by moving the discharge port obliquely downward, and
start the discharge of the viscous material from the discharge port at the second position.
